**Europäisches Patentamt**

**European Patent Office**

**Office européen des brevets**

(19)

(11) Veröffentlichungsnummer: **0 105 444**
**A2**

(12) # EUROPÄISCHE PATENTANMELDUNG

(21) Anmeldenummer: **83109592.2**

(22) Anmeldetag: **27.09.83**

(51) Int. Cl.³: **F 02 B 37/12**

(30) Priorität: **02.10.82 DE 3236564**

(43) Veröffentlichungstag der Anmeldung:
**18.04.84 Patentblatt 84/16**

(84) Benannte Vertragsstaaten:
**DE FR GB IT SE**

(71) Anmelder: **BAYERISCHE MOTOREN WERKE
Aktiengesellschaft
Postfach 40 02 40 Petuelring 130
D-8000 München 40(DE)**

(72) Erfinder: **Melzer, Hans-Harald, Dr.-Ing.
Galgenbachweg 15
D-8056 Neufahrn(DE)**

(74) Vertreter: **Schweiger, Erwin
Bayerische Motoren Werke Aktiengesellschaft Postfach
40 02 40 Petuelring 130 - AJ-30
D-8000 München 40(DE)**

(54) **Abblasevorrichtung für aufgeladene Brennkraftmaschinen, mit einem luftseitig angeordneten Abblaseventil.**

(57) Eine Abblasevorrichtung umfaßt ein Abblaseventil nach Art eines Membran- oder Kolbenventils, das durch dynamische Einwirkung der abströmenden Ladeluft in eine Offenstellung gesteuert wird. Diese Steuerungsart ist bei einem für die Brennkraftmaschine kritischen Ladedruck zu träge und ergibt eine zu geringe Ladedruck-Absenkung.

Zur raschen Ladedruck-Absenkung bei kleinbauendem Abblaseventil wird dieses mit einer Hilfseinrichtung kombiniert, die das Abblaseventil ab einem vorbestimmten dynamischen Öffnungshub durch eine statische Betriebsgröße in eine maximale Offenstellung steuert und für eine gewünschte Zeitspanne hält.

EP 0 105 444 A2

Abblasevorrichtung für aufgeladene Brennkraftmaschinen,
mit einem luftseitig angeordneten Abblaseventil

Die Erfindung bezieht sich auf eine Abblasevorrichtung der
im Oberbegriff des Hauptanspruches beschriebenen Bauart.

Bei einer bekannten Bauart (z. B. für VW-Turbodiesel)
weist die Abblasekammer eine gegenüber der Abblaseöffnung
der Ladeluftleitung gedrosselte Auslaßöffnung auf. Damit
wird beim Abblasen ein Rückstau der Ladeluft in der Abblasekammer erzielt, der zum Steuern der Offenstellung des
Abblaseventils dient.

Die vorbeschriebene Steuerung mit einer unmittelbar auf
das Abblaseventil einwirkenden dynamischen Betriebsgröße
reagiert jedoch bei stark überhöhtem Ladedruck für eine
rasche Ladedruck-Absenkung zu träge und ergibt weiter eine
zu geringe Ladedruckabsenkung.

Der Erfindung liegt die Aufgabe zugrunde, eine Abblasevorrichtung nach der im Oberbegriff des Hauptanspruches beschriebenen Bauart so zu verbessern, daß ab einem vorbestimmten kritischen Ladedruck eine rasche Druckabsenkung,
insbesondere auf ein Niveau des Saugbetriebes der Brennkraftmaschine, erzielt wird.

Diese Aufgabe wird durch die im Kennzeichen des Hauptanspruches angegebenen Merkmale gelöst.

Mit der gesonderten Steuer- bzw. Hilfseinrichtung kann ein Membran- oder Kolbenventil, insbesondere bei unterschiedlich großen Einwirkungsflächen für die Ladeluft zwischen Schließ- und Offenstellung, rasch in eine größtmögliche Offenstellung gebracht werden. Da weiter die Offenhaltung des Abblaseventils unabhängig von der dynamischen Einwirkung der abblasenden Ladeluft erzielt wird, können größtmögliche Abströmquerschnitte in der Abblasevorrichtung angeordnet werden. Damit ist jeglicher, die Druckabsenkung verzögernder Rückstau der Ladeluft vermieden.

Wird die das Abblaseventil steuernde Hilfseinrichtung vorzugsweise mit einer im wesentlichen statischen Betriebsgröße betrieben, z. B. mit der Spannung des Bordnetzes oder mit einem konstanten Unterdruck aus einem Speicher, ist eine Haltung des Abblaseventils in maximaler Offenstellung unabhängig von weiteren dynamischen Vorgängen der Brennkraftmaschine erzielt. Eine Druckabsenkung auf das Niveau im Saugbetrieb der Brennkraftmaschine ist sichergestellt. Weiter ist auch eine Offenhaltung des Abblaseventils nach erfolgter Druckabsenkung in maximaler Offenstellung, beispielsweise bis zum Abstellen der Brennkraftmaschine, möglich.

Die hubabhängige Betätigung der Hilfseinrichtung ist vorzugsweise so getroffen, daß mit Überschreiten eines für die Brennkraftmaschine unbedingt schädlichen Ladedruckes das Abblaseventil in eine maximale Offenstellung gesteuert wird. Erreicht ist damit ein Toleranzbereich für kurzzeitig wirkende Ladedruckspitzen. Weiter ist mit dem raschen Absenken des Ladedruckes auch ein schnelles Ansprechen weiterer, ladedruckabhängiger Sicherheitseinrichtungen der Brennkraftmaschine erzielt. Schließlich kann mit der Erfindung ein relativ kleinbauendes Abblaseventil erzielt werden, über das große Ladeluftmengen abzuführen sind.

- 3 -

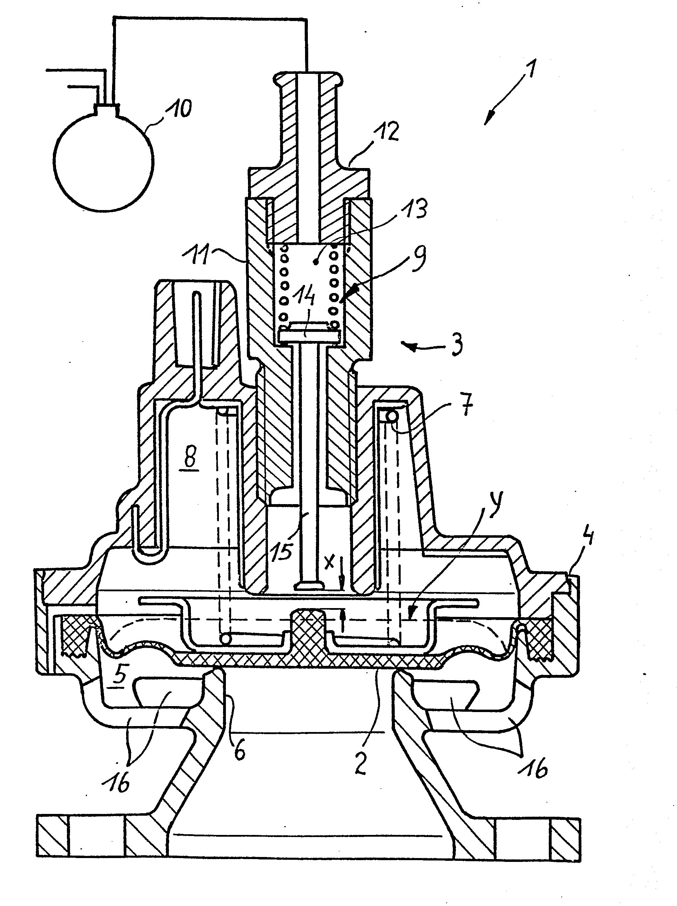

In weiteren Unteransprüchen ist ein bevorzugtes Ausführungsbeispiel beschrieben, bei dem die Steuer- bzw. Hilfseinrichtung mit dem weitgehend konstanten Unterdruck aus einem zur Steuerung weiterer Aggregate dienenden Speicher arbeitet. In der Zeichnung ist der das Abblaseventil betreffende Teil des Ausführungsbeispiels der Abblasevorrichtung im Schnitt dargestellt.

Eine Abblasevorrichtung 1 für eine nicht gezeigte Brennkraftmaschine umfaßt ein luftseitig angeordnetes Abblaseventil 2 mit einer Hilfseinrichtung 3. Das Abblaseventil 2 ist ein Membranventil, das in einem Gehäuse 4 eine Abblasekammer 5 begrenzt. In die Abblasekammer 5 mündet eine mit der nicht dargestellten Ladeluftleitung der Brennkraftmaschine verbundene Abblaseöffnung 6. Diese weist einen relativ zum Querschnitt der Abblasekammer 5 kleineren Querschnitt auf und wird vom Membranventil 2 unter der Wirkung einer Feder 7 verschlossen.

Die Hilfseinrichtung 3 umfaßt eine im Gehäuse 4 von der Abblasekammer 5 durch das Membranventil 2 abgetrennte Steuerkammer 8, ein ab einem vorbestimmten Öffnungshub des Membranventiles 2 betätigtes Steuerventil 9 und einen Unterdruckspeicher 10. Dieser ist über das Steuerventil 9 mit der Steuerkammer 8 des Membranventiles 2 druckführend verbindbar.

Das Steuerventil 9 ist in einem am Gehäuse 4 angeordneten Einschraubteil 11 angeordnet. Dieses weist andernends einen Leitungsanschluß 12 auf, der eine Ausnehmung 13 im Einschraubteil 11 verschließt. In der Ausnehmung 13 ist als Steuerventil 9 ein federbelastetes Sitzventil 14 angeordnet, das über einen Stößel 15 mit dem Abblase- bzw. Membranventil 2 in Wirkverbindung steht.

Bei Überschreiten eines vorbestimmten Ladedruckes gibt das Membranventil 2 die Abblaseöffnung 6 frei, wobei die Ladeluft über die Abblasekammer 5 und Auslaßöffnungen 16 abströmt. Die Auslaßöffnungen 16 weisen einen solchen Querschnitt auf, daß ein Rückstau der abströmenden Ladeluft in der Abblasekammer im wesentlichen vermieden wird.

Erreicht der Ladedruck einen für die Brennkraftmaschine kritischen Wert, wird das Abblase- bzw. Membranventil 2 ab einem vorbestimmten Öffnungshub "x" mittels der Hilfseinrichtung 3 in eine maximale Offenstellung gesteuert. Hierbei wird über das sich weiter öffnende Membranventil 2 das Sitzventil 14 des Steuerventils 9 über den Stößel 15 in Offenstellung gebracht. Damit beginnt ein vorbestimmter, konstanter Unterdruck aus dem Speicher 10 in der Steuerkammer 8 am Membranventil 2 zu wirken. Über den Unterdruck aus dem Speicher 10 wird das Abblase- bzw. Membranventil rasch in eine maximale Offenstellung "y" gesteuert, mit der Folge einer schnellen Ladedruck-Absenkung bis auf das Druckniveau im Saugbetrieb der Brennkraftmaschine. Das Abschalten des Unterdruckes kann an das Abstellen der Brennkraftmaschine gekoppelt sein.

Bei der Abblasevorrichtung 1 wird das Steuerventil 9 der Hilfseinrichtung 3 für das Wirken der statischen Betriebsgröße des aus einem Speicher gelieferten Unterdruckes mechanisch geschaltet. Denkbar ist auch, ein Steuerventil elektrisch oder pneumatisch zu schalten.

Denkbar ist ferner an einem Membran- oder Kolbenventil ein Fortsatz mit einem Dauermagneten am freien Ende. Der Dauermagnet wirkt mit einer vom Bordnetz versorgten, ortsfesten Spule zusammen. Diese wird ab einem vorbestimmten Öffnungshub mit einer konstanten Spannung beschaltet, wodurch das jeweilige Abblaseventil hubabhängig in eine maximale Offenstellung gesteuert und über eine gewünschte Zeitspanne in Offenstellung gehalten wird.

Patentansprüche:

1. Abblasevorrichtung für aufgeladene Brennkraftmaschinen,
   - mit einem luftseitig angeordneten Abblaseventil (2),
   - das eine Abblasekammer (5) beweglich begrenzt,
   dadurch gekennzeichnet,
   - daß das Abblaseventil (2) mit einer Hilfseinrichtung
     (3) in Verbindung steht, die das Abblaseventil ab
     einem vorbestimmten Öffnungshub (x) in eine maximale
     Offenstellung (y) steuert.

2. Abblasevorrichtung nach Anspruch 1, dadurch gekennzeichnet, daß die Hilfseinrichtung (3) das Abblaseventil (2) mittels einer statischen Betriebsgröße (konstante Spannung, konstanter Unterdruck) steuert.

3. Abblasevorrichtung nach den Ansprüchen 1 und 2, dadurch
   gekennzeichnet,
   - daß die Hilfseinrichtung (3) eine jenseits der Abblasekammer (5) vom Abblaseventil (2) begrenzte
     Steuerkammer (8),
   - ein hubabhängig betätigtes Steuerventil (9) sowie
   - einen Unterdruckspeicher (10) aufweist,
   - der über das Steuerventil (9) mit dem Steuerraum (8)
     des Abblaseventils (2) druckführend verbindbar ist.

4. Abblasevorrichtung nach Anspruch 3, dadurch gekennzeichnet,

- daß das Steuerventil (9) in einem mit einer Wand der Steuerkammer (8) verbindbaren Einschraubteil (11) angeordnet ist,

- das andernends einen Leitungsanschluß (12) aufweist,

- der eine Ausnehmung (13) verschließt, in der ein federbelastetes Sitzventil (14) als Steuerventil (9) angeordnet ist,

- das über einen Stößel (15) mit dem Abblaseventil (2) in Wirkverbindung steht.

1/1